# FASCICULE DE BREVET EUROPEEN

(11) **EP 2 226 193 B1**
(45) Date de publication et mention de la délivrance du brevet: **05.04.2017**
(21) Numéro de dépôt: 10290099.0
(22) Date de dépôt: 26.02.2010
(51) Int. Cl.: B32B 27/40, F02B 77/13

(54) **Ecran de protection acoustique destiné à être posé contre la paroi supérieure d'un moteur de véhicule automobile**
GERÄUSCHDÄMMENDER SCHUTZSCHILD ZUR BEFESTIGUNG AN DER MOTORHAUBE EINES KRAFTFAHRZEUGS
ACOUSTIC SCREEN PROTECTION FOR BEING INSTALLED AT THE UPPER WALL OF AN ENGINE OF A MOTOR VEHICLE

(30) Priorité: 05.03.2009 FR 0901019
(43) Date de publication de la demande: 08.09.2010
(73) Titulaire: Centre d'étude et de recherche pour l'automobile (CERA), 51100 Reims (FR)
(72) Inventeur: Lanfranchini, Jean-Luc, 51100 Reims (FR); Vitrant, Olivier, 51100 Reims (FR); Waxin, Laurent, 02130 Dravegny (FR)
(74) Mandataire: Sayettat, Julien Christian

(56) Documents cités:
- EP-A1- 1 516 720
- WO-A-2007/141193
- DE-A1- 10 143 167
- JP-A- 2005 352 036
- JP-A- 2009 051 180
- US-A- 6 145 617
- US-A1- 2006 029 788
- US-B1- 6 749 929

## Description

L'invention concerne un écran de protection acoustique destiné à être disposé contre la paroi supérieure d'un moteur de véhicule automobile, une architecture de montage d'un tel écran et un procédé de fabrication d'un tel écran.

Il est connu de réaliser un écran de protection acoustique destiné à être disposé au dessus de la paroi supérieure d'un moteur de véhicule automobile, ledit écran comprenant une couche supérieure de rigidification et une couche inférieure de ressort, lesdites couches étant séparées l'une de l'autre par un film d'étanchéité.

Les couches inférieure et supérieure connues sont à base de feutre, la couche supérieure étant comprimée afin de présenter la rigidité attendue.

Les écrans ainsi réalisés présentent divers inconvénients :
- ils présentent une masse élevée,
- leur finition périphérique est inesthétique dans la mesure où l'on voit la tranche des couches de feutre,
- la rigidité de la couche supérieure à base de feutre comprimé est élevée, ce qui oblige à monter l'écran sur le moteur par l'intermédiaire de plots de découplage, notamment à base d'élastomère, ceci pour éviter un rayonnement acoustique de l'écran. Il en résulte une complexification de réalisation et des surcoûts,
- il est difficile de conformer le feutre dans le cas de formes complexes.

L'invention a pour but de pallier ces inconvénients.

A cet effet, et selon un premier aspect, l'invention propose un écran de protection acoustique destiné à être posé contre la paroi supérieure d'un moteur de véhicule automobile, ledit écran comprenant une couche supérieure de rigidification et une couche inférieure de ressort, lesdites couches étant séparées l'une de l'autre par un film d'étanchéité, lesdites couches supérieure et inférieure étant à base de mousse semi rigide, ladite couche supérieure présentant une masse surfacique comprise entre 100 et 200 g/m² et ladite couche inférieure présentant une masse surfacique comprise entre 150 et 400 g/m².

Dans cette description, les termes de positionnement dans l'espace (supérieur, inférieur,...) sont pris en référence à l'écran disposé dans le véhicule.

Lorsque l'on dit que l'écran est destiné à être posé contre la paroi supérieure du moteur de véhicule automobile, cela signifie qu'il n'est pas monté par l'intermédiaire de plots de découplage mais repose directement contre ladite paroi, au moins une partie de la couche inférieure ou de la couche d'envers, dont il sera question plus loin, étant en contact avec ladite face.

L'agencement proposé consiste à remplacer le feutre des couches supérieure et inférieure par de la mousse semi rigide, c'est à dire de rigidité intermédiaire entre de la mousse rigide, utilisée pour réaliser des éléments porteurs tels que des tablettes de recouvrement des bagages, et de la mousse flexible, utilisée pour réaliser des éléments de rembourrage tels que des coussins de sièges. L'utilisation d'une mousse semi rigide, en lieu et place d'une mousse flexible qui est plus efficace dans une fonction de ressort, pour réaliser la couche inférieure de ressort est motivée par le gain de poids considérable apporté par l'utilisation d'une telle mousse, ceci en raison du différentiel de densité entre lesdites mousses. A titre d'illustration, une mousse flexible non comprimée de polyuréthanne présente une densité de 0,05 alors que son homologue semi flexible présente une densité de l'ordre de 0,015.

L'utilisation de telles mousses résout les inconvénients sus mentionnés liés à l'emploi de feutre.

Selon d'autres aspects, l'invention propose une architecture de montage d'un tel écran et un procédé de réalisation d'un tel écran.

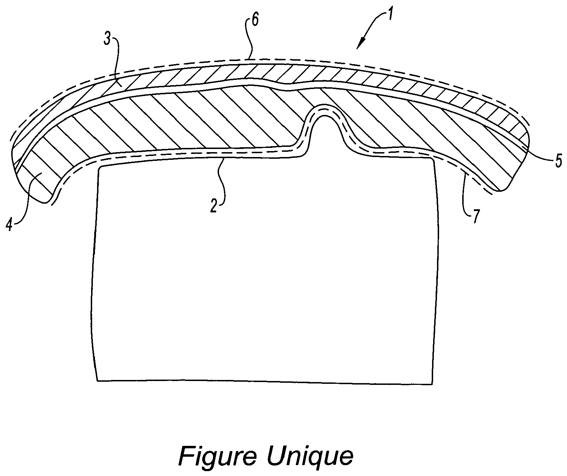

D'autres particularités et avantages de l'invention apparaîtront dans la description qui suit, faite en référence à la figure jointe qui est une vue schématique en coupe d'une architecture de montage d'un écran selon une réalisation.

En référence à la figure, on décrit un écran 1 de protection acoustique destiné à être posé contre la paroi supérieure 2 d'un moteur de véhicule automobile, ledit écran comprenant une couche supérieure 3 de rigidification et une couche inférieure 4 de ressort, l'écran 1 formant un système d'isolation acoustique de type « masse ressort », lesdites couches étant séparées l'une de l'autre par un film d'étanchéité 5, par exemple de type bicouche polyamide/polyéthylène, lesdites couches supérieure et inférieure étant à base de mousse semi rigide, par exemple de type polyuréthanne ou mélamine, la mousse de mélamine présentant une densité plus faible que la mousse de polyuréthanne, ladite couche supérieure présentant une masse surfacique comprise entre 100 et 200 g/m² et ladite couche inférieure présentant une masse surfacique comprise entre 150 et 400 g/m².

Selon une réalisation, la couche supérieure 3 présente une masse surfacique comprise entre 120 et 150 g/m² et la couche inférieure 4 présente une masse surfacique comprise entre 180 et 250 g/m².

Selon une réalisation, la couche supérieure 3 présente une épaisseur comprise entre 2 et 4 mm, et notamment de l'ordre de 3 mm. Selon une réalisation, la couche inférieure 4 présente une épaisseur comprise entre 5 et 15 mm.

Selon la réalisation représentée, la couche inférieure 4 présente une épaisseur variable, définie selon les contraintes géométriques de l'environnement.

Selon une réalisation, le film 5 présente une épaisseur inférieure à 100 microns.

Selon la réalisation représentée, la couche supérieure 3 est revêtue d'une couche d'aspect 6, par exemple un non tissé aiguilleté de forte résistance au passage de l'air.

Selon la réalisation représentée, la couche inférieure 4 est revêtue d'une couche d'envers 7, par exemple un non tissé de masse surfacique inférieure à 100g/m².

On décrit à présent une architecture de montage d'un écran 1 contre un moteur de véhicule automobile dans laquelle ledit écran est posé sur la paroi supérieure 2 dudit moteur, au moins une partie de la couche inférieure 4, ou ici de la couche d'envers 7, étant en contact avec ladite paroi.

On décrit à présent un procédé de réalisation d'un écran 1 comprenant les étapes de :
- prévoir une couche supérieure 3 et une couche inférieure 4 à base de mousse semi rigide de densité inférieure à 0,02 ainsi qu'un film 5 d'étanchéité,
- prévoir un moule chaud non représenté, par exemple à 180°C, pour réaliser un moulage à chaud, ledit moule pouvant intégrer un système de projection d'air chaud, ledit moule comprenant une matrice et un poinçon, ladite matrice étant pourvue de trous reliés à un système de tirage sous vide,
- disposer ladite couche supérieure contre ladite matrice, en interposant éventuellement entre les deux une couche d'aspect 6,
- disposer ledit film contre ladite couche supérieure,
- disposer ladite couche inférieure contre ledit film,
- effectuer un tirage sous vide, permettant un placage de ladite couche supérieure, et appliquer ledit poinçon contre ladite couche inférieure afin de définir une cavité de moulage,
- réaliser une finition éventuelle, notamment par découpe périphérique réalisée au sein du moule,
- démouler l'écran 1 obtenu.

## Revendications

1. Ecran (1) de protection acoustique destiné à être posé contre la paroi supérieure (2) d'un moteur de véhicule automobile, ledit écran comprenant une couche supérieure (3) de rigidification et une couche inférieure (4) de ressort, lesdites couches étant séparées l'une de l'autre par un film (5) d'étanchéité, lesdites couches supérieure et inférieure étant à base de mousse semi rigide, ladite couche supérieure présentant une masse surfacique comprise entre 100 et 200 g/m² et ladite couche inférieure présentant une masse surfacique comprise entre 150 et 400 g/m².

2. Ecran selon la revendication 1, **caractérisé en ce que** la couche supérieure (3) présente une masse surfacique comprise entre 120 et 150 g/m² et la couche inférieure (4) présente une masse surfacique comprise entre 180 et 250 g/m².

3. Ecran selon l'une quelconque des revendications 1 ou 2, **caractérisé en ce que** la couche supérieure (3) présente une épaisseur comprise entre 2 et 4 mm, et notamment de l'ordre de 3 mm.

4. Ecran selon l'une quelconque des revendications 1 à 3, **caractérisé en ce que** la couche inférieure (4) présente une épaisseur comprise entre 5 et 15 mm.

5. Ecran selon l'une quelconque des revendications 1 à 4, **caractérisé en ce que** la couche inférieure (4) présente une épaisseur variable.

6. Ecran selon l'une quelconque des revendications 1 à 5, **caractérisé en ce que** le film (5) présente une épaisseur inférieure à 100 microns.

7. Ecran selon l'une quelconque des revendications 1 à 6, **caractérisé en ce que** la couche supérieure (3) est revêtue d'une couche d'aspect (6).

8. Ecran selon l'une quelconque des revendications 1 à 7, **caractérisé en ce que** la couche inférieure (4) est revêtue d'une couche d'envers (7).

9. Architecture de montage d'un écran selon l'une quelconque des revendications 1 à 8 contre un moteur de véhicule automobile, **caractérisée en ce que** ledit écran est posé contre la paroi supérieure (2) dudit moteur, au moins une partie de la couche inférieure (4) ou de la couche d'envers (7) étant en contact avec ladite paroi.

10. Procédé de réalisation d'un écran selon l'une quelconque des revendications 1 à 8, **caractérisé en ce que en ce qu'**il comprend les étapes de :
• prévoir une couche supérieure (3) et une couche inférieure (4) à base de mousse semi rigide de densité inférieure à 0,02 ainsi qu'un film (5) d'étanchéité,
• prévoir un moule chaud comprenant une matrice et un poinçon, ladite matrice étant pourvue de trous reliés à un système de tirage sous vide,
• disposer ladite couche supérieure contre ladite matrice, en interposant éventuellement entre les deux une couche d'aspect (6),
• disposer ledit film contre ladite couche supérieure,
• disposer ladite couche inférieure contre ledit film,
• effectuer un tirage sous vide, et appliquer ledit poinçon contre ladite couche inférieure afin de définir une cavité de moulage,
• réaliser une finition éventuelle,
• démouler l'écran (1) obtenu.

## Patentansprüche

1. Schirm (1) zum Schallschutz, der dazu ausgelegt ist, gegen die obere Wand (2) eines Kraftfahrzeugmotors angebracht zu werden, wobei der Schirm eine obere Versteifungsschicht (3) und eine untere Federschicht (4) umfasst, wobei die Schichten voneinander durch einen Dichtungsfilm (5) getrennt sind, wobei die obere und die untere Schicht auf halbstarrem Schaum basieren, wobei die obere Schicht ein Flächengewicht aufweist, das zwischen 100 und 200 g/m² liegt und die untere Schicht ein Flächengewicht aufweist, die zwischen 150 und 400 g/m² liegt.

2. Schirm nach Anspruch 1, **dadurch gekennzeichnet, dass** die obere Schicht (3) ein Flächengewicht aufweist, das zwischen 120 und 150 g/m² liegt und die untere Schicht (4) ein Flächengewicht aufweist, das zwischen 180 und 250 g/m² liegt.

3. Schirm nach einem der Ansprüche 1 oder 2, **dadurch gekennzeichnet, dass** die obere Schicht (3) eine Dicke aufweist, die zwischen 2 und 4 mm liegt und insbesondere von 3 mm.

4. Schirm nach einem der Ansprüche 1 bis 3, **dadurch gekennzeichnet, dass** die untere Schicht (4) eine Dicke aufweist, die zwischen 5 und 15 mm liegt.

5. Schirm nach einem der Ansprüche 1 bis 4, **dadurch gekennzeichnet, dass** die untere Schicht (4) eine variable Dicke aufweist.

6. Schirm nach einem der Ansprüche 1 bis 5, **dadurch gekennzeichnet, dass** der Film (5) eine Dicke von weniger als 100 Mikrometer aufweist.

7. Schirm nach einem der Ansprüche 1 bis 6, **dadurch gekennzeichnet, dass** die obere Schicht (3) mit einer Zierschicht (6) beschichtet ist.

8. Schirm nach einem der Ansprüche 1 bis 7, **dadurch gekennzeichnet, dass** die untere Schicht (4) mit einer rückseitigen Schicht (7) beschichtet ist.

9. Architektur zur Montage eines Schirms nach einem der Ansprüche 1 bis 8 gegen einen Kraftfahrzeugmotor, **dadurch gekennzeichnet, dass** der Schirm gegen die obere Wand (2) des Motors angeordnet ist, wobei mindestens ein Teil der unteren Schicht (4) oder der rückseitigen Schicht (7) mit der Wand in Kontakt ist.

10. Verfahren zur Herstellung eines Schirms nach einem der Ansprüche 1 bis 8, **dadurch gekennzeichnet, dass** es die folgenden Schritte umfasst:
- Bereitstellen einer oberen Schicht (3) und einer unteren Schicht (4) basierend auf halbstarrem Schaum mit einer Dichte von weniger als 0,02, sowie einem Dichtungsfilm (5),
- Bereitstellen einer heißen Form, umfassend eine Matrix und einen Stempel, wobei die Matrix mit Löchern versehen ist, die mit einem Vakuumsystem verbunden sind,
- Anordnen der oberen Schicht gegen die Matrix, wobei eventuell zwischen die beiden eine Zierschicht (6) angebracht wird,
- Anordnen des Films gegen die obere Schicht,
- Anordnen der unteren Schicht gegen den Film,
- Durchführen eines Vakuums und Anwenden des Stempels gegen die untere Schicht, um einen Formhohlraum zu definieren,
- Ausführen einer eventuellen Endbearbeitung,
- Entfernen des so erhaltenen Schirms (1) aus der Form.

## Claims

1. Acoustic protective screen (1) designed to be placed against the upper wall (2) of a motor vehicle engine, said screen comprising an upper stiffening layer (3) and a lower spring layer (4), said layers being separated from one another by a sealing foil (5), said upper and lower layers having a semi-rigid foam base, said upper layer having a surface mass of between 100 and 200 g/m² and said lower layer having a surface mass of between 150 and 400 g/m².

2. Screen according to claim 1, **characterised in that** the upper layer (3) has a surface mass of between 120 and 150 g/m² and the lower layer (4) has a surface mass of between 180 and 250 g/m².

3. Screen according to any of claims 1 or 2, **characterised in that** the upper layer (3) has a thickness of between 2 and 4 mm, and in particular in the order of 3 mm.

4. Screen according to any of claims 1 to 3, **characterised in that** the lower layer (4) has a thickness of between 5 and 15 mm.

5. Screen according to any of claims 1 to 4, **characterised in that** the lower layer (4) has a variable thickness.

6. Screen according to any of claims 1 to 5, **characterised in that** the foil (5) has a thickness of less than 100 microns.

7. Screen according to any of claims 1 to 6, **characterised in that** the upper layer (3) is coated with a feature layer (6).

8. Screen according to any of claims 1 to 7, **characterised in that** the lower layer (4) is coated with a backing layer (7).

9. Architecture for mounting a screen according to any of claims 1 to 8 against a motor vehicle engine, **characterised in that** said screen is placed against the upper wall (2) of said engine, at least a portion of the lower layer (4) or the backing layer (7) being in contact with said wall.

10. Method for producing a screen according to any of claims 1 to 8, **characterised in that** it comprises the steps:
- providing an upper layer (3) and a lower layer (4) having a semi-rigid foam base with a density of less than 0.02 as well as a sealing foil (5),
- providing a hot forming mould comprising a mould and a punch, said mould being provided with holes connected to a vacuum drawing system,
- arranging said upper layer against said mould, by possibly interposing a feature layer (6) between the two,
- arranging said film against said upper layer,
- arranging said lower layer against said film,
- performing vacuum drawing and applying said punch against said lower layer in order to define a mould cavity,
- performing optional finishing,
- removing the screen (1) obtained from the mould.
